# EUROPEAN PATENT APPLICATION

(11) **EP 2 733 770 A1**
(43) Date of publication of application: **21.05.2014**
(21) Application number: 13172235.7
(22) Date of filing: 17.06.2013
(51) Int. Cl.: H01M 2/10, H01M 2/20, H01M 2/34, H01M 2/12, H01M 2/22

(54) **Rechargeable battery module**

(30) Priority: 20.11.2012 KR 20120131879
(71) Applicant: Samsung SDI Co., Ltd., Yongin-si, Gyeonggi-do (KR)
(72) Inventor: Han, Min-Yeol, Yongin-si, Gyeonggi-do (KR); Byun, Sang-Won, Yongin-si, Gyeonggi-do (KR); Park, Hyun-Gyu, Yongin-si, Gyeonggi-do (KR)
(74) Representative: Gulde & Partner

(57) **Abstract**

A rechargeable battery module (100) includes: a first battery unit (110) including a plurality of first rechargeable batteries (101); a second battery unit (120) that includes at least one second rechargeable battery (102) that is electrically coupled in series to the first battery unit (110); and a control unit (130) that controls charge and discharge of the first battery unit (110) and the second battery unit (120). A short circuit member (43) is provided only in the at least one rechargeable battery (102) of the second battery unit (120), the short circuit member (43) being electrically connected to an electrode terminal (22) of the rechargeable battery (102) of the second battery unit (120) and is electrically connected to a first module terminal (131) by deformation to cause a short circuit.

## Description

### BACKGROUND OF THE INVENTION

### 1. Field of the Invention

The invention relates to a rechargeable battery module.

### 2. Description of the Related Art

A rechargeable battery can be repeatedly charged and discharged unlike a primary battery. A rechargeable battery of a small capacity is used for a small portable electronic device such as a mobile phone, a laptop computer, and a camcorder, and a rechargeable battery of a large capacity is used as a power source for driving a motor of a hybrid vehicle and an electric vehicle.

### SUMMARY OF THE INVENTION

An object of the invention is to provide a rechargeable battery module having advantages of improving safety when an internal pressure of a battery increases in a battery module, yet without an excessive increase of production costs.

This object is solved for the rechargeable battery module mentioned above according to the invention by the features of claim 1. As the batteries of all battery units are connected in series with each other, overcurrent conducted away by the short circuit member of the at least one battery of the first battery unit does not reach the batteries of the second battery unit. Hence, providing only the at least one battery of the first battery unit with the short circuit member secures safety of the entire battery module. As the batteries of the first battery unit are not provided with short circuit members, material and installation costs of the short circuit members do not arise for the first battery unit.

In particular, the rechargeable battery module may include: a first battery unit including a plurality of first rechargeable batteries having a first electrode terminal that may be electrically connected to a first electrode and a second electrode terminal that may be electrically connected to a second electrode; a second battery unit that includes at least one second rechargeable battery having a first electrode terminal that may be electrically connected to a first electrode and a second electrode terminal that may be electrically connected to a second electrode and that may be coupled in series to the first battery unit; and
a control unit that controls charge and discharge of the first battery unit and the second battery unit and that has a first module terminal that may be electrically connected to the first electrode terminal of the first rechargeable battery and a second module terminal that may be electrically connected to the second electrode terminal of the second rechargeable battery, wherein the second rechargeable battery has a short circuit member that may be electrically connected to the second electrode terminal of the second rechargeable battery and that may be electrically connected to the first module terminal by deformation to cause a short circuit.

A first connection member that electrically connects the first module terminal and the first electrode terminal of the first battery unit may be installed in the first module terminal, and a second connection member that electrically connects the second module terminal and the second electrode terminal of the second battery unit may be installed in the second module terminal.

A short circuit connection member for an electrical connection to the short circuit member may be electrically connected to the first module terminal, and the short circuit connection member may include a conductive portion having electric conductivity and an insulating layer that encloses the conductive portion, the insulation layer preventing unintentional electrical contacts with the conductive portion.

In a portion that is opposite to, i.e. that faces the short circuit member, the insulating layer may be not formed, the conductive portion may be exposed, and the short circuit connection member may be disposed to be connected in a stacking direction of the rechargeable battery. Thus, the short circuit member can easily contact the short circuit connection member.

The short circuit connection member may be bonded to the first connection member or the first module terminal, and the first electrode may be a negative electrode, and the second electrode may be a positive electrode.

The first battery unit may include batteries of the number more than that of the second battery unit, and an intermediate connection member that couples in series the first battery unit and the second battery unit may be installed between the first battery unit and the second battery unit.

The short circuit member may be inserted into a short circuit hole that may be formed in the rechargeable battery and may be curved to protrude toward a lower part, the second rechargeable battery may include a case and a cap plate that may be coupled to the case, the short circuit hole may be formed in the cap plate, and the short circuit member may include a circumferential edge portion that may be welded in the cap plate and a convex curve portion toward a lower part from the circumferential edge portion.

The short circuit member may be installed in only the second battery, i.e. only in the at least one battery of the second battery unit. A fuse portion that intercepts flow of a current upon short-circuiting may be formed in the second battery, preventing too high short circuit.

According to an exemplary embodiment, a short circuit member of the second battery unit that may be electrically connected to a first electrode is electrically connected to a second module terminal that may be electrically connected to a second electrode of a first battery unit by deformation.

When the short circuit member is electrically connected to the second module terminal, the first battery unit is bypassed and thus overcharge of the first battery unit in which the short circuit member is not installed is prevented, whereby safety can be improved.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is a perspective view illustrating a rechargeable battery module according to a first exemplary embodiment of the present invention.
FIG. 2 is a top plan view illustrating a rechargeable battery module according to a first exemplary embodiment of the present invention.
FIG. 3 is a cross-sectional view illustrating the rechargeable battery module taken along line III-III of FIG. 1.
FIG. 4A is a circuit diagram illustrating a rechargeable battery module according to a first exemplary embodiment of the present invention, and FIG. 4B is circuit diagram illustrating an operation state of a short circuit member of a second battery unit in a rechargeable battery module according to a first exemplary embodiment of the present invention.
FIG. 5 is a perspective view illustrating a rechargeable battery module according to a second exemplary embodiment of the present invention.
FIG. 6 is a cross-sectional view illustrating a rechargeable battery module according to a second exemplary embodiment of the present invention.
FIG. 7 is a partial perspective view illustrating a negative electrode lead tab according to a second exemplary embodiment of the present invention.
FIG. 8 is a partial perspective view illustrating a positive electrode lead tab according to a second exemplary embodiment of the present invention.

### DETAILED DESCRIPTION OF THE INVENTION

The example embodiments are described more fully hereinafter with reference to the accompanying drawings.

When charging and discharging the rechargeable battery module, an abnormal reaction may occur due to a cause such as overcharge and thus when an internal pressure of a case rises, the rechargeable battery may explode and ignite.

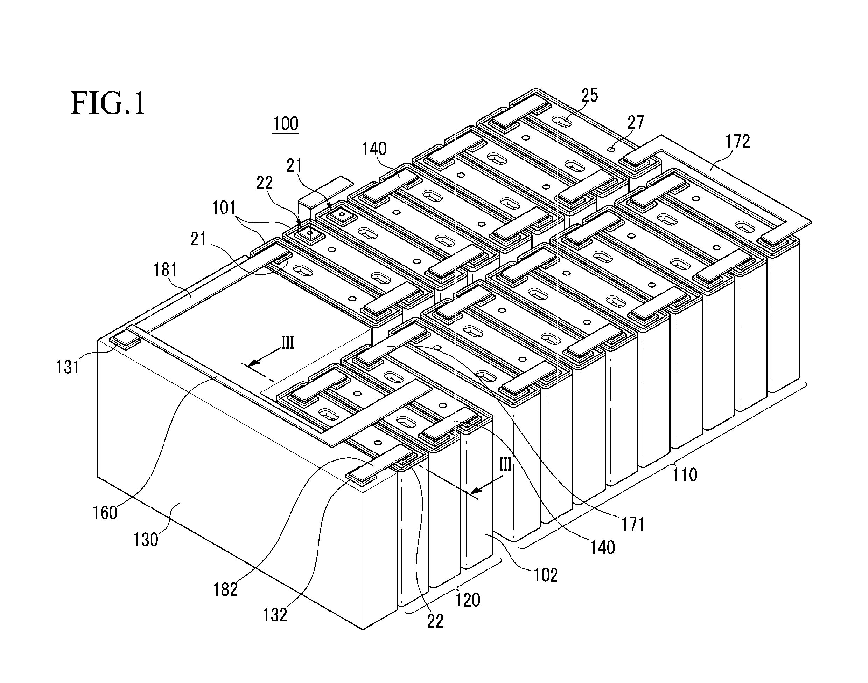

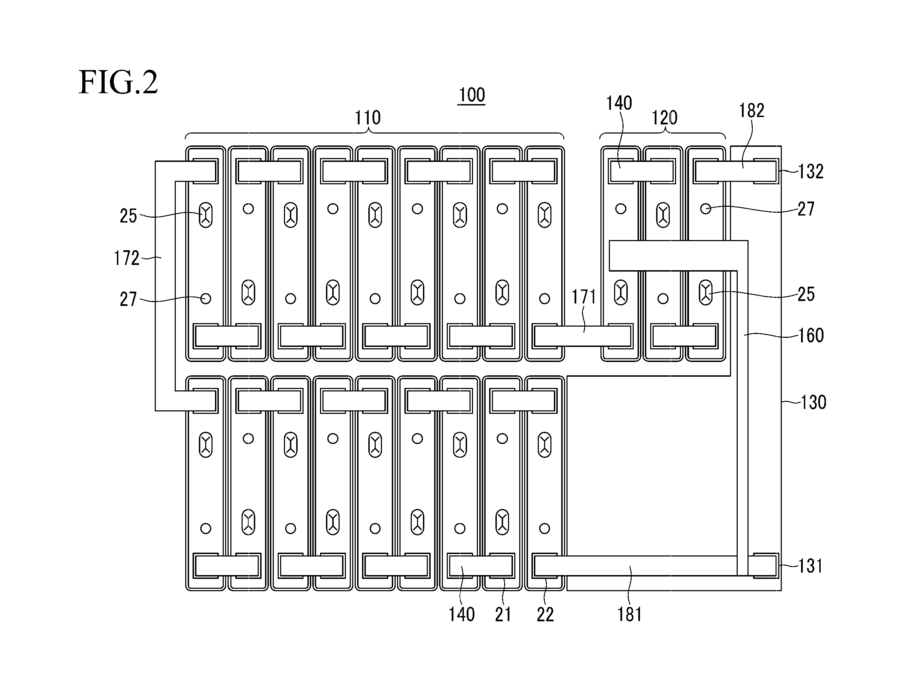

FIG. 1 is a perspective view illustrating a rechargeable battery module according to a first exemplary embodiment of the present invention, and FIG. 2 is a top plan view illustrating a rechargeable battery module according to a first exemplary embodiment of the present invention.

Referring to FIGS. 1 and 2, a rechargeable battery module 100 of the first exemplary embodiment includes a first battery unit 110 that may be formed with a plurality of first batteries 101, a second battery unit 120 that may be formed with a battery 102, and a control unit 130 that may be electrically connected to the first battery unit 110 and the second battery unit 120.

The control unit 130 may be electrically connected to the first battery unit 110 and the second battery unit 120 to control charge and discharge of the first battery unit 110 and the second battery unit 120. The control unit 130 includes a measurement element such as a voltmeter and an amperemeter and an interception element such as a relay. A first module terminal 131 and a second module terminal 132 are formed in the control unit 130.

The first battery unit 110 may be formed with a plurality of first batteries 101, and the first batteries 101 are electrically connected using a bus bar 140 as an intermediary. Further, the first battery unit 110 may be formed with two battery groups, and the battery group may be coupled in series using the bus bar 140 as an intermediary.

The second battery unit 120 may be formed with three batteries 102 and may be electrically connected using the bus bar 140 as an intermediary. The second battery unit 120 according to the present exemplary embodiment may be formed with three batteries 102, but the present invention is not limited thereto, and the second battery unit 120 includes at least one battery 102 and may be formed with the number fewer than that of a rechargeable battery constituting the first battery unit 110. However, the amount of batteries 102 of the second battery unit 120 is less than that of the first battery unit 110.

The first battery 101 includes a first electrode terminal 21 that may be electrically connected to a first electrode 11 and a second electrode terminal 22 that may be electrically connected to the second electrode 12, and the first electrode terminal 21 may be electrically connected to the first module terminal 131 of the control unit 130 using a first connection member 181 as an intermediary.

The battery 102 includes a first electrode terminal 21 that may be electrically connected to the first electrode 11 and a second electrode terminal 22 that may be electrically connected to the second electrode 12, and the second electrode terminal 22 may be electrically connected to the second module terminal 132 of the control unit 130 using a second connection member 182 as an intermediary. The first battery unit 110 and the second battery unit 120 are coupled in series using an intermediate connection member 171 as an intermediary.

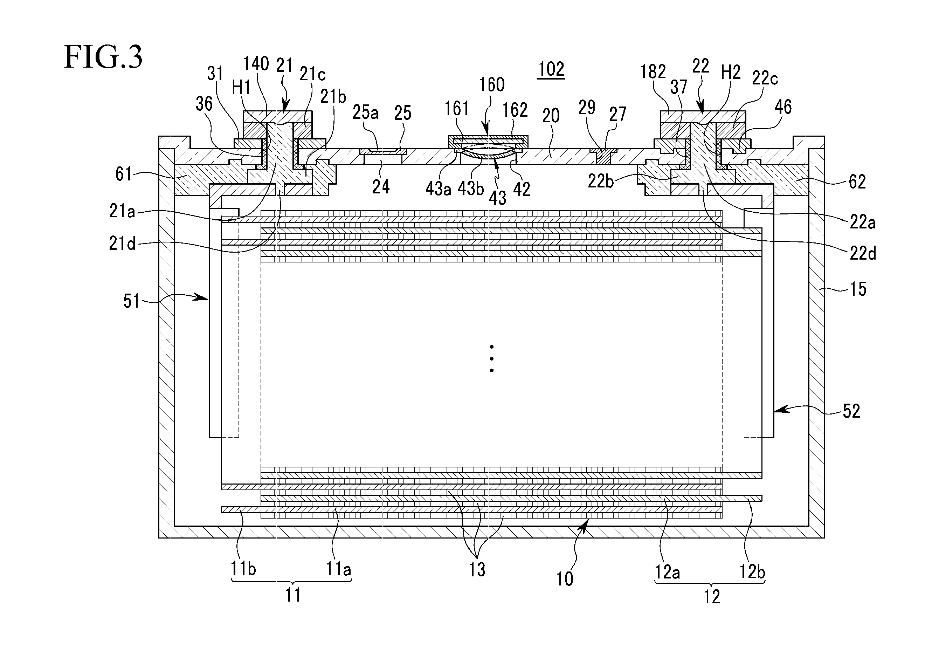

FIG. 3 is a cross-sectional view illustrating the rechargeable battery module taken along line III-III of FIG. 1.

Referring to FIGS. 1 and 3, the battery 102 of the second battery unit 120 includes an electrode assembly 10 that charges and discharges a current, a case 15 having the electrode assembly 10 therein, a cap plate 20 that may be coupled to an opening of the case 15, and the first electrode terminal 21 (negative terminal) and the second electrode terminal 22 (positive terminal) that are installed at the cap plate 20.

For example, the electrode assembly 10 may be formed by disposing the first electrode 11 (hereinafter, referred to as a 'negative electrode') and the second electrode 12 (hereinafter, referred to as a 'positive electrode') at both surfaces of a separator 13, which may be an insulator and by spiral-winding the negative electrode 11, the separator 13, and the positive electrode 12 in a jelly roll form.

The negative electrode 11 and the positive electrode 12 include coating regions 11a and 12a, respectively, in which an active material may be applied to current collectors of conductive portions and uncoated regions 11b and 12b, respectively, in which an active material may be not coated and that are thus formed in an exposed current collector.

The uncoated region 11b of the negative electrode 11 may be formed in an end portion of one side of the negative electrode 11 along the spiral-wound negative electrode 11. The uncoated region 12b of the positive electrode 12 may be formed in an end portion of one side of the positive electrode 12 along the spiral-wound positive electrode 12. The uncoated regions 11b and 12b are each disposed at both ends of the electrode assembly 10.

For example, the case 15 may be formed in an approximately cuboid to set space that houses the electrode assembly 10 and an electrolyte solution therein, and an opening that connects external space and internal space may be formed at one surface of the cuboid. The opening enables to insert the electrode assembly 10 into the case 15.

The cap plate 20 may be installed in an opening of the case 15 to close and seal the case 15. For example, the case 15 and the cap plate 20 may be made of aluminum to be welded to each other.

Further, the cap plate 20 includes an electrolyte injection opening 29, a vent hole 24, and terminal holes H1 and H2. The electrolyte injection opening 29 couples the cap plate 20 to the case 15 and enables to inject an electrolyte solution into the case 15. After the electrolyte solution is injected, the electrolyte injection opening 29 may be sealed by a seal stopper 27.

In order to discharge an internal pressure of the battery 102, the vent hole 24 may be closed and sealed by a vent plate 25. When an internal pressure of the battery 102 arrives at a predetermined pressure, the vent plate 25 may be cut out and the vent hole 24 may be opened. The vent plate 25 has a notch 25a that guides cutout.

The first electrode terminal 21 and the second electrode terminal 22 are installed in the terminal holes H1 and H2 of the cap plate 20 and are electrically connected to the electrode assembly 10. That is, the first electrode terminal 21 may be electrically connected to the negative electrode 11 of the electrode assembly 10, and the second electrode terminal 22 may be electrically connected to the positive electrode 12 of the electrode assembly 10. Therefore, the electrode assembly 10 is drawn out to the outside of the case 15 through the first electrode terminal 21 and the second electrode terminal 22.

Because the first electrode terminal 21 and the second electrode terminal 22 form the same structure at the inside of the cap plate 20, the first electrode terminal 21 and the second electrode terminal 22 will be described together with the same structure, and because the first electrode terminal 21 and the second electrode terminal 22 form a different structure at the outside of the cap plate 20, a different structure will be separately described.

The first and second electrode terminals 21 and 22 include rivet terminals 21a and 22a that are installed in the terminal holes H1 and H2, respectively, of the cap plate 20, flanges 21b and 22b that are widely formed integrally with the rivet terminals 21a and 22a at the inside of the cap plate 20, and plate terminals 21c and 22c that are disposed at the outside of the cap plate 20 and that are connected to the rivet terminals 21a and 22a by riveting or welding.

Negative and positive electrode gaskets 36 and 37 are installed between the rivet terminals 21a and 22a of the first and second electrode terminals 21 and 22 and an inner surface of the terminal holes H1 and H2, respectively, of the cap plate 20 and seal and electrically insulate between the rivet terminals 21a and 22a of the first and second electrode terminals 21 and 22, respectively and the cap plate 20.

The negative and positive electrode gaskets 36 and 37 are further extended between the flange 21b and 22b and an inner surface of the cap plate 20 and seal and electrically insulate between the flange 21b and 22b and the cap plate 20. That is, by installing the first and second electrode terminals 21 and 22 in the cap plate 20, the negative and positive electrode gaskets 36 and 37 prevent an electrolyte solution from being leaked through the terminal holes H1 and H2.

Negative and positive electrode lead tabs 51 and 52 electrically connect the first and second electrode terminals 21 and 22 to the negative and positive electrodes 11 and 12, respectively of the electrode assembly 10. Support protrusions 21d and 22d are formed in a lower end portion of the rivet terminals 21a and 22a, and the support protrusions 21d and 22d are fixed to the negative and positive electrode lead tabs 51 and 52 by welding.

Negative and positive electrode insulation members 61 and 62 are installed between the negative and positive electrode lead tabs 51 and 52 and the cap plate 20 to electrically insulate the negative and positive electrode lead tabs 51 and 52, respectively and the cap plate 20. Further, the negative and positive electrode insulation member 61 and 62 are coupled to the cap plate 20 at one side and enclose the negative and positive electrode lead tabs 51 and 52, the rivet terminals 21a and 22a, and the flanges 21b and 22b at the other side, thereby stabilizing a connection structure thereof.

The terminal plate 21c of the first electrode terminal 21 may be electrically connected to the rivet terminal 21a to be disposed at the outside of the cap plate 20 with an insulation member 31 interposed therebetween.

The insulation member 31 may be installed between the terminal plate 21c and the cap plate 20 and electrically insulates the terminal plate 21c and the cap plate 20. That is, the cap plate 20 maintains a state that may be electrically insulated from the first electrode terminal 21.

A top plate 46 of the second electrode terminal 22 electrically connects the plate terminal 22c and the cap plate 20 of the second electrode terminal 22. For example, the top plate 46 may be interposed between the plate terminal 22c and the cap plate 20 and penetrates the rivet terminal 22a.

Therefore, by coupling the top plate 46 and the plate terminal 22c to an upper end portion of the rivet terminal 22a and by caulking the upper end portion, the top plate 46 and the plate terminal 22c are coupled to the upper end portion of the rivet terminal 22a. The plate terminal 22c may be installed at the outside of the cap plate 20 with the top plate 46 interposed therebetween. The positive electrode gasket 37 further extends between the rivet terminal 22a and the top plate 46.

A short circuit member 43 may be installed in a short circuit hole 42 that may be formed in the cap plate 20. The short circuit member 43 may be formed in a plate shape including a flat circumferential edge portion 43a and a convex curve portion 43b that may be formed from the circumferential edge portion 43a toward the inside of the case 15. The circumferential edge portion 43a may be welded to the case 15 to be electrically connected to the case 15.

The first battery 101 includes an electrode assembly, a first electrode terminal, and a second electrode terminal, as in the battery 102. However, the first battery 101 does not have a short circuit member and has the same structure as that of the battery 102, except for a configuration in which a short circuit member may be installed, and a repetition description of the same structure will be omitted.

In an upper part of the short circuit member 43, a short circuit connection member 160 that may be electrically connected to the first module terminal 131 may be installed. The short circuit connection member 160 may be fixed to the first connection member 181 by welding and may be electrically connected to the first module terminal 131 using the first connection member 181 as an intermediary.

In an upper portion of the second battery unit 120, the short circuit connection member 160 may be connected in a stacking direction of the batteries 102 and may be positioned at an upper portion of the short circuit member 43 of the batteries 102.

The short circuit connection member 160 includes a long plate-shaped conductive portion 161 that may be made of a conductive material and an insulating layer 162 that encloses the conductive portion 161. The insulating layer 162 may be installed to enclose the conductive portion 161, and in the short circuit connection member 160, at a surface opposite to the short circuit member 43, an insulating layer is not formed and an opening is formed. Accordingly, the conductive portion 161 is separated from the short circuit member 43 and faces the short circuit member 43.

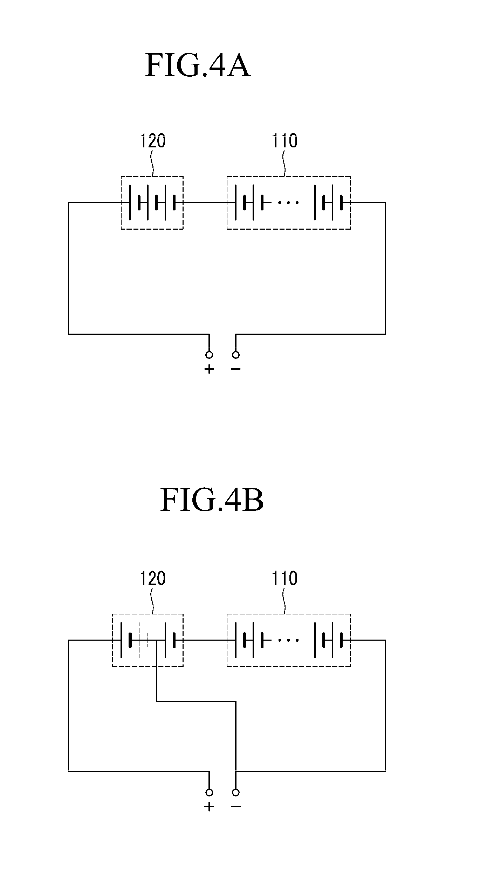

As shown in FIG. 4A, before the short circuit member 43 operates, the first battery unit 110 and the second battery unit 120 are coupled in series.

When a withstanding voltage of the battery 102 of the second battery unit 120 rises, the short circuit member 43 may be convexly inversion-deformed toward an upper part, and when the short circuit member 43 may be inversion-deformed, the short circuit member 43 and the short circuit connection member 160 are electrically connected. Accordingly, the case 15 that is electrified as a positive electrode and the first module terminal 131 that is electrified as a negative electrode are electrically connected.

As shown in FIG. 4B, when the first module terminal 131 and the case 15 are electrically connected, a short circuit occurs, and a current is discharged and moves to a negative electrode of the first module terminal 131 through the short circuit member 43 and the short circuit connection member 160. Accordingly, a current does not flow to the first battery unit 110 and is bypassed through the short circuit member 43 and the short circuit connection member 160.

As described above, according to the present exemplary embodiment, only in the second battery unit 120 that may be formed with the few number of batteries, the short circuit member 43 may be installed, when operating the short circuit member 43, safety of the first battery unit 110 that does not have the short circuit member 43 can be secured.

When the short circuit member 43 may be installed, safety of a unit battery is improved, but an erroneous contact of the short circuit member 43 and the short circuit connection member 160 and a condensation problem of moisture between the short circuit member 43 and the short circuit connection member 160 may occur. Further, a production cost according to installation of the short circuit member 43 and the short circuit connection member 160 largely increases.

However, as in the present exemplary embodiment, when the short circuit member 43 may be installed only in some rechargeable battery, safety of the entire rechargeable battery module 100 can be secured. When the short circuit member 43 is installed, a short circuit occurs in the rechargeable battery that is weakest upon overcharging, but a short circuit occurs in batteries sequentially constituting a rechargeable battery module and thus even if a short circuit member may be installed only in some rechargeable batteries, enough safety can be secured.

Upon overcharging, in the battery 102 that may be adjacently connected to the second module terminal 132, a short circuit first occurs and thus in the present exemplary embodiment, as the second battery unit 120 may be directly connected to the second module terminal 132, a current flowing to the first battery unit 110 may be intercepted and thus safety can be further secured.

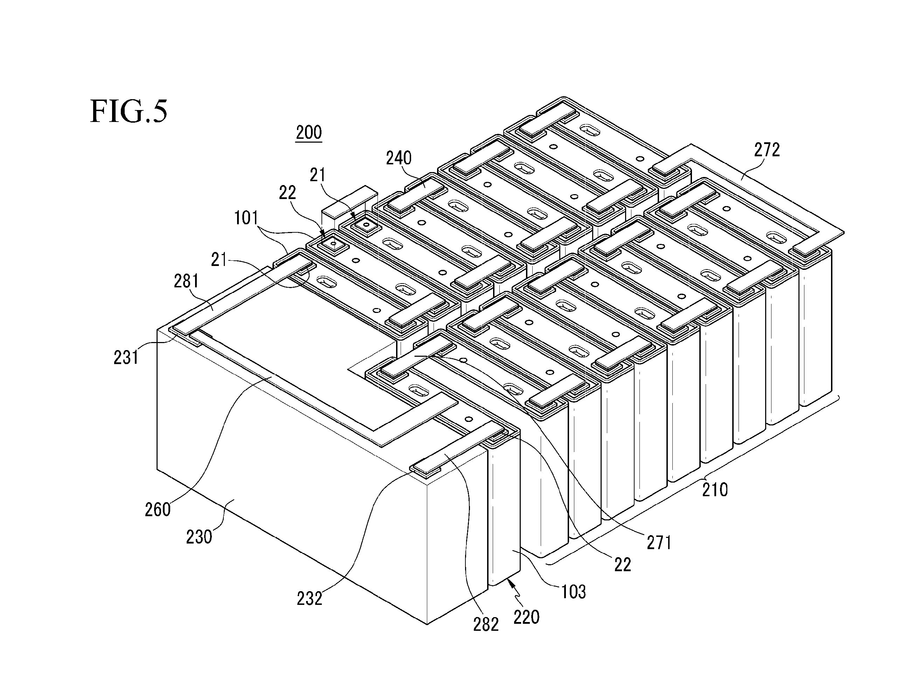

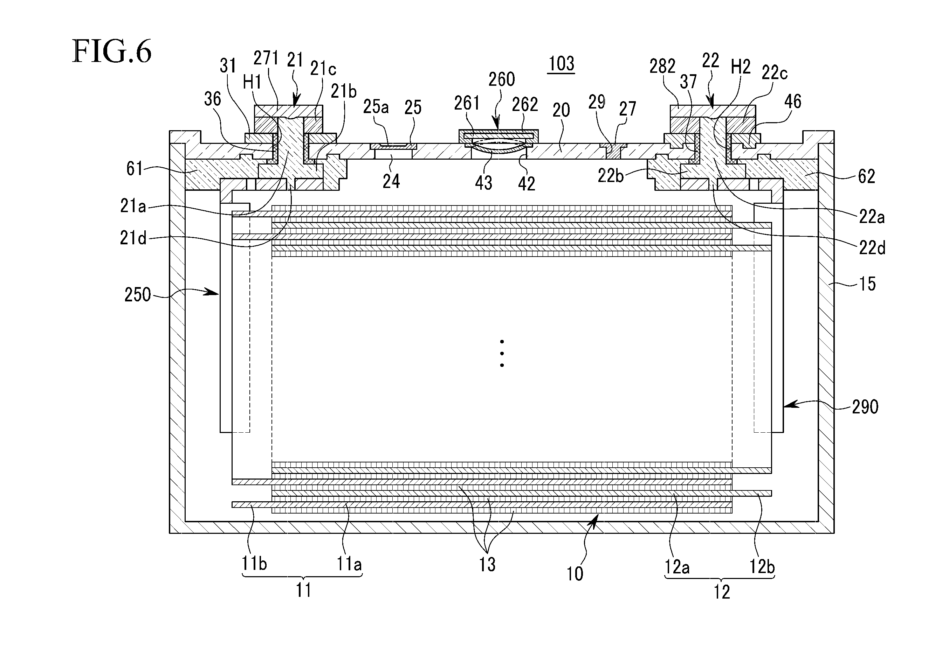

FIG. 5 is a perspective view illustrating a rechargeable battery module according to a second exemplary embodiment of the present invention, and FIG. 6 is a cross-sectional view illustrating a rechargeable battery module according to a second exemplary embodiment of the present invention.

Referring to FIGS. 5 and 6, a rechargeable battery module 200 according to the second exemplary embodiment includes a first battery unit 210 that may be formed with a plurality of first batteries 101, a second battery unit 220 that may be formed with the battery 103, and a control unit 230 that may be electrically connected to the first battery unit 210 and the second battery unit 220.

The control unit 230 may be electrically connected to the first battery unit 210 and the second battery unit 220 to control charge and discharge of the first battery unit 210 and the second battery unit 220. The control unit 230 includes a measurement element such as a voltmeter and an amperemeter and an interception element such as a relay. A first module terminal 231 and a second module terminal 232 are formed in the control unit 230.

The first battery unit 210 may be formed with a plurality of first batteries 101, and the first batteries 101 are electrically connected using a bus bar 240 as an intermediary. Further, the first battery unit 210 may be formed with two battery groups, and the battery groups are coupled in series using the bus bar 240 as an intermediary. The first battery 101 may be formed in the same structure as that of the first battery 101 according to the first exemplary embodiment.

The second battery unit 220 may be formed with the battery 103, and a short circuit member 43 may be installed only in the battery 103.

The first battery 101 includes a first electrode terminal 21 that may be electrically connected to a negative electrode and a second electrode terminal 22 that may be electrically connected to a positive electrode, and the first electrode terminal 21 may be electrically connected to the first module terminal 231 of the control unit 230 using a first connection member 281 as an intermediary.

As shown in FIG. 6, the battery 103 includes an electrode assembly 10 including the first electrode 11 and the second electrode 12, a case 15 having the electrode assembly 10 therein, a cap plate 20 that may be coupled to an opening of the case 15, and the first electrode terminal 21 and the second electrode terminal 22 that are installed in the cap plate 20. A short circuit member 43 may be fixed to the cap plate 20, and in an upper portion of the short circuit member 43, a short circuit connection member 260 may be installed.

The battery 103 has the same structure as that of the battery 102 according to the first exemplary embodiment, except for a structure of a negative electrode lead tab 250 and a positive electrode lead tab 290 and therefore a repetition description of the same structure will be omitted.

The negative electrode lead tab 250 electrically connects the first electrode terminal 21 to the first electrode 11 of the electrode assembly 10, and the positive electrode lead tab 290 electrically connects the second electrode terminal 22 to the second electrode 12 of the electrode assembly 10.

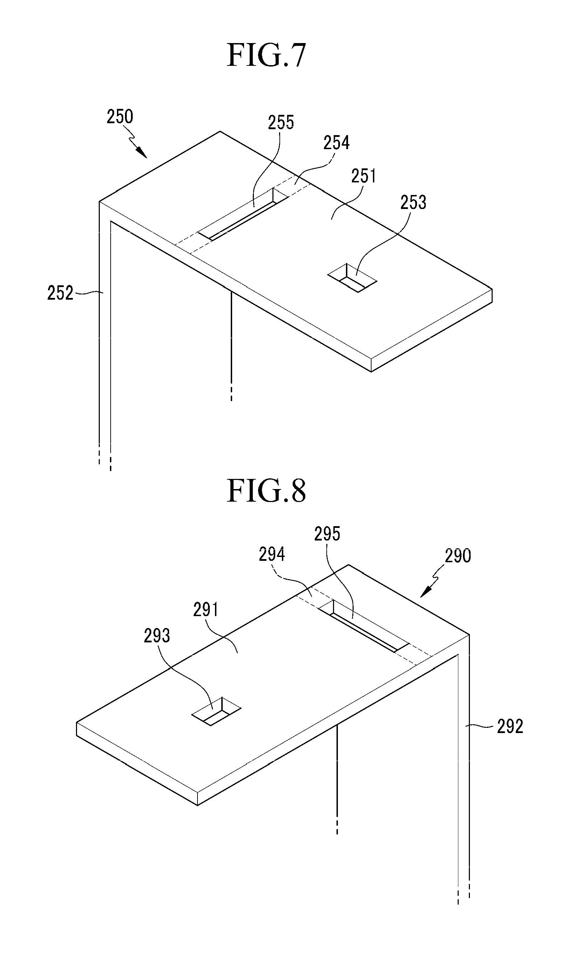

As shown in FIG. 7, the negative electrode lead tab 250 includes a terminal bonding portion 251 that may be attached to the first electrode terminal 21 by welding and an electrode bonding portion 252 that may be bent from the terminal bonding portion 251 and that may be attached to the negative electrode 11 by welding. A support hole 253 for inserting a support protrusion 21d may be formed in the negative electrode lead tab 250, and the support protrusion 21d and the negative electrode lead tab 250 are bonded by welding. Further, in the negative electrode lead tab 250, a fuse portion 254 having a cross-section area smaller than that of other portions and to be deformed when an overcurrent flows may be formed.

As a fuse hole 255 may be formed in the fuse portion 254, the fuse portion 254 has a cross-section area smaller than that of other portions, and as flow of a current increases, when an overcurrent exceeding a limit current flows, the fuse portion 254 is melted and an electrical connection of the electrode assembly 10 and the first electrode terminal 21 may be intercepted.

As shown in FIG. 8, the positive electrode lead tab 290 includes a terminal bonding portion 291 that may be attached to the second electrode terminal 22 by welding and an electrode bonding portion 292 that may be bent from the terminal bonding portion 291 and that may be attached to the positive electrode 12 by welding. A support hole 293 for inserting the support protrusion 22d may be formed in the positive electrode lead tab 290, and the support protrusion 22d and the positive electrode lead tab 290 are bonded by welding. Further, in the positive electrode lead tab 290, a fuse portion 294 having a cross-section area smaller than that of other portions and to be deformed when an overcurrent flows is formed.

As a fuse hole 295 may be formed in the fuse portion 294, the fuse portion 294 has a cross-section area smaller than that of other portions, and as flow of a current increases, when an overcurrent exceeding a limit current flows, the fuse portion 294 is melted and an electrical connection of the electrode assembly 10 and the second electrode terminal 22 is intercepted.

The second electrode terminal 22 may be electrically connected to the second module terminal 232 of the control unit 230 using a second connection member 282 as an intermediary. The first battery unit 210 and the second battery unit 220 are coupled in series using an intermediate connection member 271 as an intermediary.

In the battery 103, the short circuit member 43 may be installed, as in the first exemplary embodiment, and in an upper part of the short circuit member 43, the short circuit connection member 260 that may be electrically connected to the first module terminal 231 may be installed. The short circuit connection member 260 may be fixed to the first module terminal 231 by direct welding.

The short circuit connection member 260 includes a long plate-shaped conductive portion 261 that may be made of a conductive material and an insulating layer 262 that encloses the conductive portion 261. The insulating layer 262 may be installed to enclose the conductive portion 261, and in the short circuit connection member 260, the insulating layer 262 is not formed but an opening may be formed at a surface opposite to the short circuit member 43. The conductive portion 261 may be separated from the short circuit member 43 and faces the short circuit member 43.

Accordingly, when a withstanding voltage of the battery 103 rises, the short circuit member 43 may be convexly inversion-deformed toward an upper part, and as the short circuit member 43 may be inversion-deformed, the short circuit member 43 and the short circuit connection member 260 are electrically connected and thus a short circuit occurs.

Further, as shown in FIGS. 7 and 8, because the fuse portions 254 and 294 are formed in the negative electrode lead tab 250 and the positive electrode lead tab 290, a short circuit occurs and thus when a large current flows, the fuse portions 254 and 294 are melted to intercept a current. Accordingly, the battery 103 contacting with the short circuit connection member 260 becomes a neutral battery and thus safety can be secured.

## Claims

1. A rechargeable battery module (100), comprising:
a first battery unit (110) comprising a plurality of rechargeable batteries (101) having a first electrode terminal (21) and a second electrode terminal (22);
a second battery unit (120) that comprises at least one rechargeable battery (102) having a first electrode terminal (21) and a second electrode terminal (22) and that is electrically coupled in series to the first battery unit (110); and
a control unit (130) that controls charge and discharge of the first battery unit (110) and the second battery unit (120) and that has a first module terminal (131) that is electrically connected to the first electrode terminal (21) of one of the rechargeable batteries (101) of the first battery unit (110) and a second module terminal (132) that is electrically connected to the second electrode terminal (22) of the rechargeable battery (102) of the second battery unit (120), **characterized in that** only the at least one rechargeable battery (102) of the second battery unit (120) has a short circuit member (43) that is electrically connected to the second electrode terminal (22) of the rechargeable battery (102) of the second battery unit (120) and that is electrically connected to the first module terminal (131) by deformation to cause a short circuit.

2. The rechargeable battery module (100) of claim 1, wherein the first battery unit (110) has more batteries (101) than the second battery unit (120).

3. The rechargeable battery module (100) of claim 1 or 2, wherein all batteries (102) of the second battery (120) unit have a short circuit member (43).

4. The rechargeable battery module (100) of any of claims 1 to 3, wherein a first connection member (181) electrically connects the first module terminal (131) and the first electrode terminals (21) of the first battery unit (110) and
a second connection member (182) electrically connects the second module terminal (132) and the second electrode terminal (22) of the second battery (120), and wherein a short circuit connection member (160) for an electrical connection to the short circuit member (43) is electrically connected to the first module terminal (131).

5. The rechargeable battery module (100) of claim 4, wherein the short circuit connection member (160) comprises a conductive portion (161) having electric conductivity and an insulating layer (162) that encloses the conductive portion (161).

6. The rechargeable battery module (100) of claim 5, wherein the insulating layer (162) is not formed on the short circuit connection member (160) in a portion that is opposite to the short circuit member (43), , and the conductive portion (161) is exposed.

7. The rechargeable battery module (100) of any of claims 4 to 6, wherein the short circuit connection member (160) extends in a stacking direction of the rechargeable batteries (101; 102).

8. The rechargeable battery module (100) of claim 7, wherein the short circuit connection member (160) overlaps the short circuit members (43) of all batteries (102) of the second battery unit (120) perpendicular to the stacking direction.

9. The rechargeable battery module (100) of any of claims 3 to 8, wherein the short circuit connection member (160) is bonded to the first connection member (181) or the first module terminal (131).

10. The rechargeable battery module (100) of any of claims 1 to 9, wherein the first electrode terminal (21) is electrically connected to a first, negative electrode (11), and the second electrode terminal (22) is electrically connected to a second, positive electrode (12).

11. The rechargeable battery module (100) of any of claims 1 to 10, wherein an intermediate connection member (171) couples in series the first battery unit (110) and the second battery unit (120) .

12. The rechargeable battery module (100) of any of claims 1 to 11, wherein the short circuit member (43) is inserted into a short circuit hole (42) that is formed in the rechargeable battery (102) of the second battery unit (120) and is curved to protrude toward a lower part of the battery (102).

13. The rechargeable battery module (100) of any of claims 1 to 12, wherein the rechargeable battery (102) of the second battery unit (120) comprises a case (15) and a cap plate (20) that is coupled to the case (15),
the short circuit hole (42) is formed in the cap plate (20), and
the short circuit member (43) comprises a circumferential edge portion (43a) that is welded to the cap plate (20), and a convex curve portion (43b) at a lower part from the circumferential edge portion (43a).

14. The rechargeable battery module (200) of any of claims 1 to 13, wherein a fuse portion (254, 294) that intercepts flow of a current upon short-circuiting is formed in the battery (102) of the second battery unit (120).
